Europäisches Patentamt

European Patent Office

Office européen des brevets

(11) Veröffentlichungsnummer: **0 094 524**
**A2**

# EUROPÄISCHE PATENTANMELDUNG

(21) Anmeldenummer: 83103943.3

(51) Int. Cl.³: **E 04 F 15/16**

(22) Anmeldetag: 22.04.83

(30) Priorität: 19.05.82 DE 3218988

(43) Veröffentlichungstag der Anmeldung:
23.11.83 Patentblatt 83/47

(84) Benannte Vertragsstaaten:
AT CH DE FR LI NL

(71) Anmelder: METZELER KAUTSCHUK GMBH
Gneisenaustrasse 15
D-8000 München 50(DE)

(72) Erfinder: Duschek, Franz
Bremserstrasse 130
D-6700 Ludwigshafen/Rhein(DE)

(72) Erfinder: Krüger, Gerhard
Talackerweg 11
D-6942 Mörlenbach 2(DE)

(74) Vertreter: Michelis, Theodor, Dipl.-Ing.
Gneisenaustrasse 15
D-8000 München 50(DE)

(54) Mit Noppen versehene Bahn aus einem Elastomer und Korkmehl sowie Verfahren zur Herstellung einer solchen Bahn.

(57) Eine Korknoppenplatte weist ein eingebettetes Gittergewebe auf, das sich in die Noppen erstreckende Ausbeulungen aufweist. Eine solche Korknoppenplatte wird auf einer Rotations-Vulkanisiermaschine bzw. einer AUMA hergestellt, wobei zwischen zwei Schichten aus einer vulkanisierbaren Mischung aus einem Elastomer und Korkmehl das Gittergewebe angeordnet wird. Die Noppen werden durch ein Lochblech erzeugt, dessen Löcher eine Tiefe haben, die größer als die Dicke der benachbarten Schicht aus der Mischung ist.

FIG.1

METZELER KAUTSCHUK GmbH
München

München, 2.5.1983
MK '243 P 82 EP

Mit Noppen versehene Bahn aus einem Elastomer und
Korkmehl sowie Verfahren zur Herstellung einer solchen
Bahn

Die Erfindung betrifft eine auf einer Oberfläche mit
vorstehenden Noppen versehene Bahn aus einer vulkanisierten
Mischung aus einem Elastomer und Korkmehl sowie ein
Verfahren zur Herstellung einer solchen Bahn.

Solche Bahnen werden auch als "Korknoppenplatten" bezeichnet und beispielsweise als Fußbodenbelag, insbesondere für Boote und Schiffe, verwendet.

Die üblichen Korknoppenplatten enthalten etwa 50 % vulkanisiertes Elastomer und 50 % Korkmehl, so daß ihre mechanische Festigkeit relativ gering ist; insbesondere die
Verbindung zwischen der Bahn und den Noppen hat sich als
Schwachstelle herausgestellt, so daß die Noppen bereits
bei relativ geringen Verformungen der Bahn abreißen und
brechen.

Der Erfindung liegt deshalb die Aufgabe zugrunde, eine
Korknoppenplatte der angegebenen Gattung zu schaffen, bei
der dieser Nachteil nicht auftritt.

Insbesondere soll eine Bahn der angegebenen Gattung vorgeschlagen werden, bei der die Noppen auch bei extremer Verformung der Bahn nicht abbrechen können.

Dies wird erfindungsgemäß dadurch erreicht, daß in die Bahn ein Gittergewebe eingebettet ist, das sich in die Noppen erstreckende Ausbeulungen ausweist.

Weiterhin soll die Erfindung ein Verfahren zur Herstellung einer Bahn schaffen, das die sichere Verbindung zwischen Bahn und Noppen gewährleistet

Dies wird erfindungsgemäß dadurch erreicht, daß zwei Schichten aus der Mischung, zwischen·denen das Gittergewebe angeordnet ist, auf einer Rotations-Vulkanisiermaschine vulkanisiert werden.

Die mit der Erfindung erzielten Vorteile beruhen insbesondere darauf, daß das Gittergewebe, das durch die Bahn verläuft, an den Stellen, wo sich die Noppen befinden, mit starken Ausbeulungen versehen ist, die sich bis in die Noppen hinein erstrecken. Dadurch dient also dieses Gittergewebe als "Armierung" für die Noppen, so daß sie eine erhebliche Kerbzähigkeit haben und die Noppen besser auf der Bahn verankert werden. Bei Versuchen wurde z. B. festgestellt, daß bereits der Ausschuß bei der Herstellung, während der die Bahn extremen Verformungen unterliegt, weniger als 1 % beträgt, also praktisch vernachlässigbar ist, während bei der bisher üblichen Herstellung die Noppen sehr oft abbrachen und deshalb mit einem relevanten Ausschuß gerechnet werden mußte.

Die Verwendung eines Polyester-Gittergewebes hat sich wegen der Seewasserfestigkeit dieses Materials als günstig herausgestellt. Außerdem hat dieses Material eine ausreichende mechanische Festigkeit, wodurch es zu der oben erläuterten Erhöhung der Scherfestigkeit der Noppen kommt.

Die Dimensionen des Gittergewebes, also insbesondere die Maschengröße, sollten so auf die Größe, insbesondere den Durchmesser, der Noppen abgestellt werden, daß sich mindestens ein Faden des Gittergewebes durch jede Noppe erstreckt. Gute Ergebnisse wurden mit zwei Fäden pro Noppe erhalten.

Die Erfindung wird im folgenden anhand von Ausführungsbeispielen unter Bezugnahme auf die beiliegenden, schematischen Zeichnungen näher erläutert. Es zeigen

Fig. 1    eine Draufsicht auf eine Korknoppenbahn,

Fig. 2    im vergrößerten Maßstab einen Schnitt durch die Bahn mit einer Noppe und der zuhörigen Ausbeulung des Gittergewebes,

Fig. 3    einen Schnitt durch die verschiedenen Schichten, die aufeinandergelegt der Rotations-Vulkanisiermaschine zugeführt werden, und

Fig. 4    eine schematische Ansicht der Rotations-Vulkanisiermaschine.

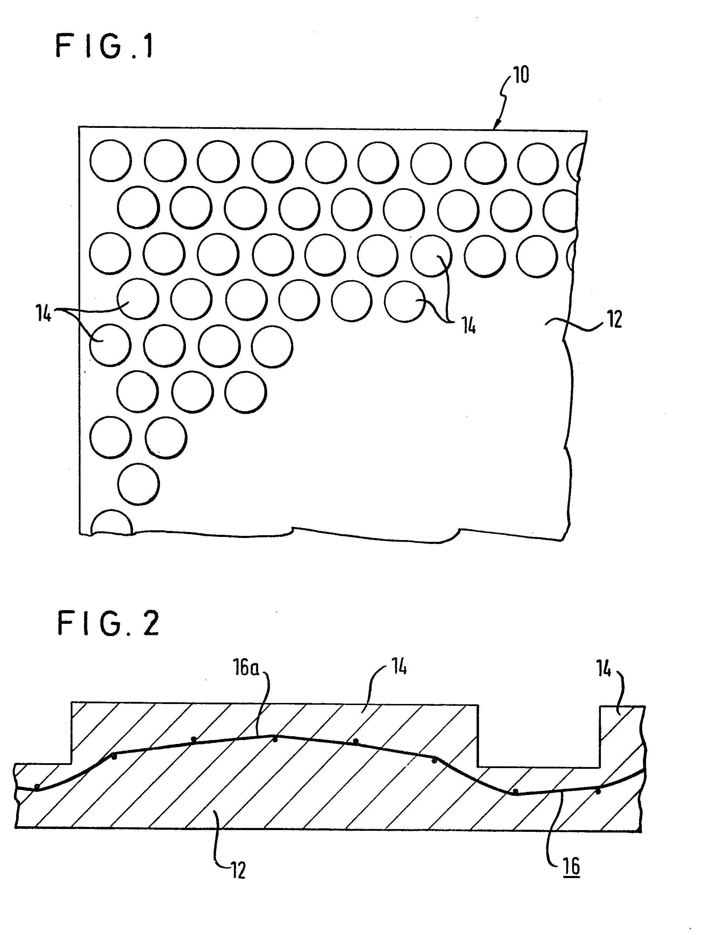

Wie man in Fig. 1 erkennen kann, weist eine allgemein durch das Bezugszeichen 10 angedeutete Korknoppenplatte eine plane Bahn 12 auf, die auf einer Oberfläche mit Noppen 14 mit kreisförmigem Querschnitt versehen sind. Diese Noppen 14 sind jeweils in Reihen, also auf einer Linie, angeordnet, wobei die Noppen der benachbarten Reihen zueinander etwas versetzt sind.

Fig. 2 zeigt im vergrößerten Maßstab einen Schnitt durch die Bahn 12 und eine Noppe 14. In die Bahn 12 ist ein ansich planes Gittergewebe 16 eingebettet, das an der Stelle der Noppe 14 mit einer Ausbeulung 16a versehen ist, die sich bis in die Mitte der Höhe der Noppe 14 erstreckt. Dieses Gittergewebe 16 wird vollständig von dem Material der Korknoppenplatte bedeckt, so daß es von außen nicht sichtbar ist.

Eine solche Korknoppenplatte 10 hat beispielsweise die folgenden, wesentlichen Abmessungen:

| | |
|---|---|
| Dicke der Bahn 12: | 1,5 mm |
| Durchmesser einer Noppe 14: | 10 mm |
| Höhe einer Noppe: | 1,5 mm |
| Abstand zwischen zwei benachbarten Noppen 14: | 3 mm |
| Eindringtiefe der Ausbeulung 16a in die Noppen: | 0,7 mm |
| Stärke eines Fadens des Gittergewebes 16: | 0,18 mm |
| Größe einer Masche des Gittergewebes 16: | 2 mm x 2 mm |

Die Schuß- und Kettfäden des Gittergewebes 16 sind gleich, wobei die Größen der Maschen des Gittergewebes 16 so auf den Durchmesser der Noppen 14 abgestellt werden, daß sich die Ausbeulungen 16a von mindestens zwei Fäden des Gittergewebes 16 in eine Noppe 14 hinein erstrecken.

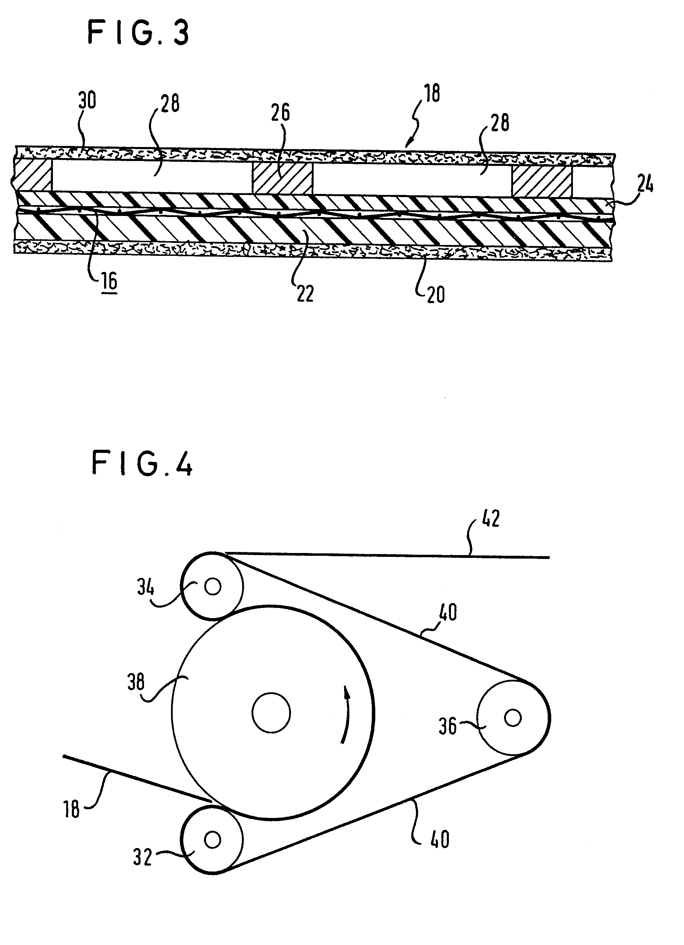

Eine solche Korknoppenplatte 10 wird in einer Rotations-vulkanisiermaschine, auch AUMA genannt, hergestellt, deren Grundaufbau in Fig. 4 zu erkennen ist; eine solche Rotations-Vulkanisiermaschine weist eine vordere, untere Umlenkwalze 32, eine hintere Umlenk- und Spannwalze 36 sowie eine vordere, obere Umlenkwalze 34 auf. Ein Druckband 40 verläuft von der vorderen, oberen Umlenkwalze
34 über die hintere Umlenk- und Spannwalze 36 zu der
vorderen, unteren Umlenkwalze 32 und ist dann um eine
rotierende Heiztrommel 38 geschlungen, die sich in Richtung
des Pfeils dreht. In den Spalt zwischen der vorderen,
unteren Umlenkwalze 32 und der Heiztrommel 38 wird ein
noch zu erläuterndes Schichtengebilde 18 eingeführt und
mittels des Druckbandes 40 gegen die Oberfläche der Heiztrommel 38 gedrückt, so daß sich das Schichtengebilde 18
erwärmt und die darin befindliche, vulkanisierbare Mischung ausvulkanisieren kann. An der vorderen, oberen
Umlenkwalze wird dann das Fertigprodukt 42, nämlich die
Korknoppenplatte 10, abgetrennt, während das Druckband 40
weiter zu der hinteren Umlenk- und Spannwalze läuft.

Fig. 3 zeigt im vergrößerten Maßstab das Schichtengebilde
18 mit einem zur Ausbildung der Noppen 14 dienenden Lochblech 26.

Dieses Schichtengebilde 18 weist eine untere Mitläuferbahn
20, eine Schicht 22 aus einer vulkanisierbaren Mischung
aus einem Elastomer und dem Korkmehl, eine weitere Schicht
24 aus dieser vulkanisierbaren Mischung, auf deren unterer
Fläche das Gittergewebe 16 aufgelegt ist, das Lochblech 26
mit den Löchern 28 und eine weitere, auf das Lochblech 26
aufgelegte Mitläuferbahn 30 auf.

Die Mischungen, aus denen die beiden Schichten 22 und 24
bestehen, enthalten neben den hier interessierenden Materialien, nämlich einem Elastomer und dem Korkmehl etwa
im Verhältnis 50 % / 50 %, noch die üblichen Zusätze, beispielsweise Vulkanisationsbeschleuniger, Vulkanisationshilfsmittel, Alterungsschutzmittel, usw.

Die beiden Mitläuferbahnen 20 und 30 bestehen aus einem
bemusterten Material, insbesondere einem Dessinstoff,
so daß sie eine entsprechende Prägung auf den Oberflächen
der Schichten 22 und 24 erzeugen, nämlich auf der gemäß
der Darstellung in Fig. 2 unteren Fläche der Bahn 12 sowie
auf der oberen, kreisförmigen Fläche der Noppen 14, wie
noch erläutert werden soll.

Die Löcher 28 des Lochbleches 26 haben eine Tiefe, die
größer als die Dicke der oberen Schicht 24 aus der vulkanisierbaren Mischung ist, d.h., die Dicke des Lochbleches
26 ist größer als die Dicke der Schicht 24.

Bei der oben angegebenen Höhe der Noppen von etwa 1,5 mm
beträgt die Tiefe der Löcher 28 und damit die Dicke des
Lochbleches 26 ebenfalls 1,5 mm; die obere Schicht 24 aus
der vulkanisierbaren Mischung hat dann eine Dicke von ca.
0,7 mm, während die untere Schicht 22 aus der vulkanisierbaren Mischung eine Dicke von etwa 1,2 mm hat.

Auf das Lochblech 26 und damit auf die oberen Mündungen
der Löcher 28 ist die Mitläuferbahn 30 aufgelegt, so daß
die Löcher 28 nach oben verschlossen sind.

Wird dieses das Lochblech 26 enthaltende Schichtengebilde
18 von dem Druckband 40 gegen die Heiztrommel 38 der AUMA
gedrückt, so fließt zunächst das Material der oberen Schicht
24 in die Löcher 28 des Lochbleches 26. Wie erwähnt, ist
die Dicke dieser Schicht 24 geringer als die Tiefe der
Löcher 28, so daß die Materialstärke der Schicht 24 die
Löcher 28 nicht ausfüllt und deshalb Material der Schicht
22 nachfließt und in die Löcher 28 eindringt. Dadurch wird
jedoch das Gittergewebe 16, das sich zwischen den beiden
Schichten 22 und 24 befindet, mitgenommen und ebenfalls
in die Löcher 28 eingedrückt, wodurch sich die aus Figur
2 erkennbaren Ausbeulungen 16a der einzelnen Fäden des Gittergewebes 16 ergeben.

Das Eindringen der vulkanisierbaren Mischung der beiden
Schichten 22 und 24 in die Löcher 28 wird durch die obere
Mitläuferbahn 30 begrenzt, die praktisch als "Boden" für
das Material dient, also das Ausfließen des Materials aus
den Löchern 28 verhindert, jedoch gleichzeitig die Verdrängung der Luft aus den Löchern 28 ermöglicht.

Die vulkanisierbare Mischung wird also gegen die obere
Mitläuferbahn 30 gedrückt, wodurch, wie erwähnt, die oberen,
kreisförmigen Flächen der Noppen 14 ebenfalls eine Musterstruktur erhalten.

Wenn das Schichtengebilde 18 mittels des Druckbandes 40
von der rotierenden Heiztrommel 38 mitgenommen und zu der
Walze 34 gebracht wird, erwärmen sich die beiden Mischungen
aus dem Elastomer, beispielsweise einem Naturkautschuk, und
dem Korkmehl, so daß es zur Vernetzung kommt. Das ausvulkanisierte Material kann dann als Fertigprodukt 42 an der
Walze 34 abgezogen werden. Anschließend werden auf nicht
näher dargestellte Weise die beiden Mitläuferbahnen 20 und
30 sowie das Lochblech 26 entfernt, so daß man die Korknoppenplatte 10 erhält, die an ihrer Bodenfläche sowie an
den kreisförmigen Oberflächen der Noppen 14 mit einem
Muster versehen ist. In die Korknoppenplatte 10 eingebettet,
also von außen nicht sichtbar, ist das Gittergewebe 16,
dessen Ausbeulungen 16a bis in die Noppen 14 hineinragen.

Patentansprüche

1. Auf mindestens einer Oberfläche mit vorstehenden Noppen versehene Bahn aus einer vulkanisierten Mischung aus einem Elastomer und Korkmehl, d a d u r c h   g e - k e n n z e i c h n e t ,   daß in die Bahn (12) ein Gittergewebe (16) eingebettet ist, das sich in die Noppen (14) erstreckende Ausbeulungen (16a) aufweist.

2. Bahn nach Anspruch 1, dadurch gekennzeichnet, daß ein Gittergewebe (16) aus Polyester verwendet wird.

3. Bahn nach einem der Ansprüche 1 oder 2, dadurch gekennzeichnet, daß die Fäden des Gittergewebes eine Dicke von 0,1 bis 0,25 mm haben.

4. Bahn nach einem der Ansprüche 1 bis 3, dadurch gekennzeichnet, daß die Kett- und Schußfäden des Gittergewebes (16) gleich sind.

5. Bahn nach einem der Ansprüche 1 bis 4, dadurch gekennzeichnet, daß sich mindestens ein Faden des Gittergewebes (16) durch jede Noppe (14) erstreckt.

6. Bahn nach einem der Ansprüche 1 bis 5, dadurch gekennzeichnet, daß die Ausbeulungen (16a) des Gittergewebes (16) bis etwa in die Mitte der Höhe der Noppen (14) reichen.

7. Bahn nach einem der Ansprüche 1 bis 6, dadurch gekennzeichnet, daß die Oberflächen der Noppen (14) und/oder der Bahn (12) mit einem Muster versehen sind.

8. Verfahren zur Herstellung einer vulkanisierten Bahn nach einem der Ansprüche 1 bis 7, dadurch gekennzeichnet, daß zwei Schichten aus der Mischung, zwischen denen das Gittergewebe angeordnet ist, auf einer Rotations-Vulkanisiermaschine (AUMA) vulkanisiert werden.

9. Verfahren nach Anspruch 8, dadurch gekennzeichnet, daß auf eine der beiden Schichten ein Lochblech aufgelegt wird.

10. Verfahren nach Anspruch 9, dadurch gekennzeichnet, daß die Dicke der das Lochblech berührenden Schicht kleiner als die Tiefe der Löcher ist.

11. Verfahren nach einem der Ansprüche 8 bis 10, dadurch gekennzeichnet, daß die beiden Schichten durch Mitläuferbahnen abgedeckt werden.

FIG.1

FIG.2

FIG. 3

FIG. 4